# EUROPÄISCHE PATENTANMELDUNG

(11) **EP 3 200 283 A1**
(43) Veröffentlichungstag der Anmeldung: **02.08.2017**
(21) Anmeldenummer: 17154269.9
(22) Anmeldetag: 01.02.2017
(51) Int. Cl.: H01R 13/24, H01R 39/64, H01R 12/73, H01R 24/50, H01R 107/00, H01R 39/26

(54) **DREHÜBERTRAGER UND VORRICHTUNG MIT DREHÜBERTRAGER**

(30) Priorität: 01.02.2016 DE 102016001036
(71) Anmelder: Venturetec Mechatronics GmbH, 87600 Kaufbeuren (DE)
(72) Erfinder: Dollhofer, Topias, 87600 Kaufbeuren (DE); Dollhofer, Ville, 87600 Kaufbeuren (DE); Kiefer, Magnus, 87600 Kaufbeuren (DE); Pleß, Dominik, 87600 Kaufbeuren (DE)
(74) Vertreter: Henkel, Breuer & Partner

(57) **Zusammenfassung**

Die Erfindung betrifft einen Drehübertrager mit einer Leiterbahn 1, einem Stift 3, der mit der Leiterbahn 1 kontaktiert, so dass er entlang der Leiterbahn 1 bei einer Drehbewegung des Drehübertragers schleift, wobei der Stift 3 einen Kontaktabschnitt 5 und ein Umlenkelement 9, insbesondere eine Kugel, umfasst, die in einer Hülle 7 in deren Längsrichtung gleitfähig angeordnet und durch ein elastisches Element 11, wie eine Spiralfeder, gegen die Hülle 7 vorgespannt sind. Der Kontaktabschnitt 5 ragt an seiner der Leiterbahn 1 zugwandten Seite aus der Hülle 7 hervor, um die Leiterbahn 1 zu kontaktieren, und der Kontaktabschnitt 5 weist an seiner der Leiterbahn 1 abgewandten Seite eine zur Längsrichtung der Hülle 7 geneigte Fläche 13 auf, wobei das Umlenkelement 9 bzw. die Kugel durch das elastische Element 11 gegen die geneigte Fläche 13 gedrückt wird.

## Beschreibung

Die Erfindung betrifft einen Drehübertrager und eine Vorrichtung mit einem derartigen Drehübertrager, wie einen Industrieroboter.

In vielen technischen Gebieten, etwa bei Werkzeugmaschinen, in der Robotertechnik, der Luftfahrt, der Satellitenkommunikation oder ähnlichem, ist es erforderlich, Leistung und/oder Signale zwischen zwei sich relativ zueinander drehenden Teilen zu übertragen. Hierzu ist es üblich, sogenannte Drehübertrager einzusetzen.

Grundsätzlich kann hierbei zwischen kontaktfreien Drehübertragern und solchen mit Schleifkontakten unterschieden werden. Kontaktfreie Drehübertarger arbeiten mit optischer Signalübertragung oder mit einer kapazitiven Übertragung.

Drehübertrager mit Schleifkontakten weißen üblicherweise auf einer Seite eine oder mehrere Leiterbahnen auf, die als konzentrische Kreise ausgebildet seien können. Diese können ringförmig entlang einer Welle vorgesehen sein, oder es wird eine tellerförmige Leiterplatte bereitgestellt, auf deren Oberfläche die Leiterbahnen als Kreise ausgebildet sind, je nach den räumlichen Anforderungen an den Drehübertrager.

Die Leiterbahnen werden von jeweils mindestens einer Bürste kontaktiert, die an einem sich relativ zu den Leiterbahnen drehenden Teil angebracht sind. Die Bürsten weißen typischerweise eine große Anzahl dünner Metalldrähte auf die mit einer niedrigen Federkraft an der Leiterbahn anliegen.

Diese Bauweise erlaubt eine sichere und effektive Übertragung - sowohl von Leistung als auch von Signalen - zwischen den sich relativ zueinander drehenden Teilen des Drehübertragers.

Allerdings hat diese Bauweise auch eine Reihe von Nachteilen.

Bei der Herstellung von Kleinserien von Drehübertragern werden die Bürsten von Hand an einer Leiterplatte angebracht. Dies ist aufgrund der Empfindlichkeit der Bürsten fehleranfällig und aufwendig und kann nicht automatisiert werden.

Bei einem Richtungswechsel der Drehung des Drehübertragers kommt es dazu, dass die Drähte der Bürste, die vorher entlang der Leiterbahn gezogen wurde, nun entlang der Leiterbahn geschoben werden müssen. Dies führt leicht zu einem Auffächern der Bürste. Wenn mehrere Bürsten mit einem geringen räumlichen Abstand vorgesehen sind, kann dies zu Kurzschlüssen führen. Auch befördern häufige Richtungswechsel ein Brechen der Drähte der Bürste. Abgebrochene Drahtstücke innerhalb des Drehübertragers können ebenfalls zu Übertragungsfehlern und Kurzschlüssen führen.

Aufgabe der Erfindung ist es daher, einen verbesserten Drehübertrager bereitzustellen, der einfacher und kostengünstiger hergestellt werden kann und der eine hohe Betriebssicherheit auch bei Richtungswechseln der Drehung aufweist.

Gelöst wird diese Aufgabe durch einen Drehübertrager mit einer Leiterbahn, einem Stift, der mit der Leiterbahn kontaktiert, so dass er entlang der Leiterbahn bei einer Drehbewegung des Drehübertragers schleift, wobei der Stift einen Kontaktabschnitt und ein Umlenkelement, insbesondere eine Kugel, umfasst, die in einer Hülle in deren Längsrichtung gleitfähig angeordnet und durch ein elastisches Element, wie eine Spiralfeder, gegen die Hülle vorgespannt sind. Der Kontaktabschnitt ragt an seiner der Leiterbahn zugwandten Seite aus der Hülle hervor, um die Leiterbahn zu kontaktieren, und der Kontaktabschnitt weist an seiner der Leiterbahn abgewandten Seite eine zur Längsrichtung der Hülle geneigte Fläche auf, wobei das Umlenkelement bzw. die Kugel durch das elastische Element gegen die geneigte Fläche gedrückt wird.

Durch das Zusammenwirken des Umlenkelements, der geneigten Fläche des Kontaktabschnitts, der Feder und der Hülle wird der Kontaktabschnitt nicht nur in Längsrichtung der Hülle, sondern auch senkrecht hierzu mit einer Kraft beaufschlagt. Dies führt dazu, dass der Kontaktabschnitt und/oder das Umlenkelement gegen die Innenwand der Hülle gedrückt wird, so dass sich ein Stromweg vom Kontaktabschnitt zur Hülle ausbildet. Dieser Stromweg bleibt auch bei einem Richtungswechsel der Drehung erhalten, so dass eine unterbrechungsfreie Übertragung von Leistung und/oder Signalen sichergestellt ist. Der Stift kann als Ganzes in großen Stückzahlen maschinell hergestellt werden und muss nur in üblicherweise an einer Leiterplatte des Drehübertragers kontaktiert, beispielsweise aufgelötet werden.

Bei der Erfindung ist es bevorzugt, dass die Feder eine Federkraft von 0,005 N bis 0,5 N, weiter bevorzugt von 0,01 N bis 0,2 N und besonders bevorzugt von 0,08 N bis 0,12 N aufweist.

Diese Federkraft ist wesentlich niedriger als die Federkraft von üblichen Federkontaktstiften, wie etwa Batteriekontakten, die in einigen Punkten den erfindungsgemäßen Stiften des Drehübertragers ähneln. Die geringe Federkraft ist erforderlich, um die Reibung zwischen den beiden relativ zueinander beweglichen Teilen des Drehübertragers niedrig zu halten, insbesondere wenn viele Stifte und Leiterbahnen verwendet werden. Außerdem verringert die niedrige Federkraft den Abrieb beim Schleifen - sowohl auf der Seite der Leiterbahnen als auch auf der Seite des Kontaktabschnitts.

Andererseits muss die Federkraft ausreichen, um über die geneigte Fläche des Kontaktabschnitts eine hinreichend große Kraft senkrecht zur Längsrichtung der Hülle zu erzeugen, so dass ein sicherer Kontakt zwischen dem Kontaktabschnitt und/oder dem Umlenkelement und einer Innenwand der Hülle gebildet wird.

Der maximale Federweg liegt bevorzugt bei 0,5 mm bis 2,5 mm, weiter bevorzugt bei 0,75 mm bis 2 mm und besonders bevorzugt bei 1 mm bis 1,5 mm. Der Federweg ist hilfreich, um Fertigungstoleranzen bei den Leiterplatten und den Stiften auszugleichen und um eventuelle Unebenheiten der Leiterbahnen zu kompensieren. Der Arbeitspunkt des Drehübertragers, also der Abstand der beiden Leiterplatten wird so eingestellt, dass der Kontaktabschnitt etwa 0,5 mm von seiner maximalen Lage verschoben ist.

Es ist bevorzugt, dass der Kontaktabschnitt eine Oberflächenhärte von 200 HV bis 1000 HV, vorzugsweise von 300 HV bis 750 HV und besonders bevorzugt von 350 HV bis 500 HV hat. Bei der bevorzugten Ausführungsform sind die Leiterbahnen weicher ausgestaltet als die Kontaktabschnitte der Stifte, so dass Verschleiß eher bei den Leiterbahnen auftritt, die beispielsweise eine Oberflächenhärte von 100 HV bis 200 HV, weiter bevorzugt von 150 HV bis 170 HV aufweisen.

Bei den bevorzugten Ausführungsformen ist der Drehübertrager mit einer Mehrzahl von Stiften ausgestattet, die die selbe Leiterbahn kontaktieren. Dies hat den Vorteil, dass selbst im Fall eines Kontaktverlustes eines Stifts, eine zuverlässige Übertragung immer noch erfolgen kann. Beispielsweise ist es durch die vereinfachte Herstellung problemlos möglich vier oder sechs Stifte für eine Leiterbahn vorzusehen. Insbesondere wenn die Stifte zur Leistungsübertragung genutzt werden, ist eine größere Anzahl von Stiften hilfreich um den Leitungsquerschnitt zu vergrößern.

Außerdem ist es bevorzugt, dass der Drehübertrager eine Mehrzahl von parallelen Leiterbahnen aufweist, die zusammen mit einer Mehrzahl von Stiften mehrere unabhängige Übertragungswege bereitstellen. Auf diese Art können parallel eine Mehrzahl getrennter Datenkanäle übertragen werden, wodurch die zur Verfügung stehende Bandbreite steigt.

In einer bevorzugten Ausführungsform ist bzw. sind die Leiterbahn oder die Leiterbahnen kreisförmig auf einer ersten Leiterplatte ausgebildet. Ebenso ist bzw. sind der Stift oder die Stifte auf einer zweiten Leiterplatte ausgebildet, die der ersten Leiterplatte gegenüberliegt, wobei die beiden Leiterplatten relativ zueinander um eine gemeinsame Mittelachse drehbar gehalten sind.

Im Gegensatz zu Ausführungsformen, bei denen die Leiterbahnen als Ringe um eine Welle gebildet sind, bietet die oben beschriebene Ausführungsform die Möglichkeit zu einer sehr platzsparenden Bauweise.

Vorzugsweise wird der Drehübertrager in einem Industrieroboter eingesetzt. Andere Einsatzmöglichkeiten sind jedoch ebenfalls möglich, etwa bei Werkzeugmaschinen, der Luftfahrt, der Satellitenkommunikation oder ähnlichem. Insbesondere ist der erfindungsgemäße Drehübertrager für solche Einsatzgebiete gedacht, bei denen häufige und schnelle Richtungswechsel der Drehung auftreten können.

Im Folgenden wird die Erfindung anhand einer bevorzugten Ausführungsform und den beiliegenden Figuren beschrieben.

In den Figuren zeigt:
- Fig. 1: eine perspektivische Ansicht zweier Leiterplatten, die zusammen den erfindungsgemäßen Drehübertrager bilden;
- Fig. 2: einen Teilschnitt eines Stiftes des Drehübertragers aus Figur 1.

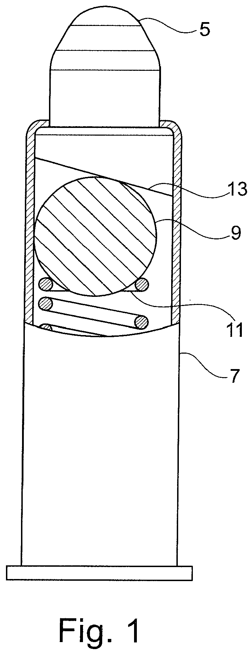

Figur 1 zeigt zwei Leiterplatten 15 und 17 eines Drehübertragers. Auf der Leiterplatte 15, die im folgenden auch als erste Leiterplatte bezeichnet wird, sind eine Mehrzahl konzentrischer kreisförmiger Leiterbahnen 1 ausgebildet. Bei der bevorzugten Ausführungsformen sind die Leiterbahnen aus Hartgold oder mit Hartgold beschichtet und mit einem Härtegrad von 150 bis 170 HV.

Die Leiterplatten 15 und 17 sind aus einem glasfaserverstärkten Material aufgebaut, und vorzugsweise für den Hochfrequenzbetrieb geeignet, beispielsweise als FR-4 oder RF-35.

Die zweite gezeigte Leiterplatte 17 weist eine Mehrzahl von Stiften 3 auf, die so angeordnet sind, dass, wenn sich die Leiterplatten 15 und 17 um die gemeinsame Mittelachse drehen, jeweils eine Gruppe von Stiften 3 einer der Leiterbahnen 1 zugeordnet ist. So ist beispielsweise zu erkennen, dass der äußersten Leiterbahn 1 vier Stifte zugeordnet sind. Obwohl dies eine bevorzugte Ausführungsformen ist, kann auch eine andere Anzahl von Stiften verwendet werden, Beispielsweise können sechs Stifte 3 für eine Leiterbahn 1 vorgesehen sein, oder es reicht auch, drei oder zwei Stifte 3 einer Leiterbahn 1 zu zuordnen.

In Figur 1 werden die breiteren Leiterbahn 1 für die Übertragung von Leistung bzw. Strom verwendet, während die schmalen Leiterbahnen 1 für die Datenübertragung vorgesehen sind.

Auf der nicht dargestellten Seite der Leiterplatten 15 und 17 ist ein Teil der jeweilige elektrische Verdrahtung für die Stifte 3 bzw. die Leiterbahnen 1 vorgesehen. Beispielsweise können auf den nicht gezeigten Seiten der Leiterplatten 15 und 17 entsprechend Steckverbindung zur elektrischen Kontaktierung der Leiterbahnen 1 bzw. der Stifte 3 vorgesehen sein.

Die Stifte 3 sind entweder auf entsprechenden Kontaktpunkten der Leiterplatte 17 angelötet, oder sie werden durch entsprechende Durchgangslöcher durch die Leiterplatte 17 geschoben, und von der Rückseite verlötet. Auch eine Befestigung als Presssitz ist möglich. Die Stifte 3 haben alle in etwa die gleiche Höhe, sodass, wenn die beiden Leiterplatten 15 und 17 um die gemeinsame Mittelachse rotieren, die Spitzen der Stifte alle in einer Ebene liegen und mit der Leiterplatte 15, genauer gesagt mit den jeweiligen Leiterbahnen 1 auf der Leiterplatte 15, kontaktieren. Wenn unterschiedloche Stifte auf einer Leiterplatte verwendet werden, ist sicher zu stellen, dass der Federweg der Federn in den Stiften so gewählt ist, dass alle Stifte ihre zugehörige Leiterbahn kontaktieren, ohne an einen der Endpunkte des Federwegs zu gelangen.

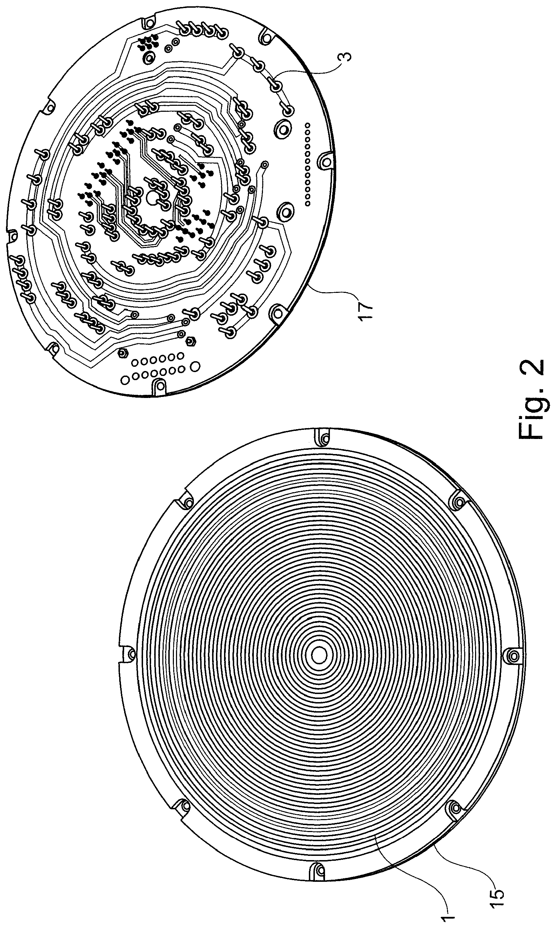

Figur 2 zeigt einen Teilschnitt durch einen der Stifte 3 aus dem Drehübertrager aus Figur 1.

Der Stift 3 weist eine Hülle 7 auf, die vorzugsweise zylindrisch, weiter bevorzugt kreis-zylindrischer ausgebildet ist. Die Hülle ist an ihrem einen Ende mit einem Anschlag versehen, sodass ein Kontaktabschnitt 5, der in der Hülle 7 in deren Längsrichtung beweglich, nämlich gleitfähig, gehalten ist und ebenfalls einen Anschlag aufweist, in der Hülle 7 zurückgehalten gehalten werden kann.

Der Kontaktabschnitt 5 ist bei der Ausführungsform ein Kolben, der an seiner einen Seite, die der Innenseite der Hülle zu- und der Leiterbahn 1 abgewandt ist, eine geneigte Fläche 13 aufweist. Diese Fläche ist in Bezug auf die Hüllenlängsrichtung geneigt. Die genaue Form der Fläche ist relativ frei wählbar. Beispielsweise kann die Fläche ein einfacher gerader Schnitt mit einem Winkel von 10 bis 50° zur Hüllenlängsrichtung sein. Andere Formen der geneigten Fläche 13 - etwa Kugelsegmente oder ähnliches - sind möglich.

Angrenzend an die geneigte Fläche 13 ist bei dem Stifte 3 des erfindungsgemäßen Drehübertragers ein Umlenkelement in Form einer Kugel 9 vorgesehen, das ebenfalls in der Hülle 7 aufgenommen ist. Genauso wie der Kontaktabschnitt 5 ist auch die Kugel 9 in ihrer Abmessung so gewählt, dass sie innerhalb der Hülle 7 in deren Längsrichtung beweglich ist.

Vorzugweise ist der Durchmesser der Kugel 9 etwas kleiner als der Innendurchmesser der Hülle 7. Bei einer bevorzugten Ausführungsform hat der Stift einen Innendurchmesser von 2 mm. Der Durchmesser der Kugel 9 ist dann vorzugsweise um 0,2 bis 0,3 mm kleiner als der Innendurchmesser der Hülle 7.

Dies führt dazu, dass die Kugel 9 im Kontakt mit der geneigten Fläche 13 nicht mittig in der Hülle 7 sein wird, sondern zu einer Seite der Hülle 7 verschoben ist und auch mit der Innenwand der Hülle in Kontakt kommt.

Die Kugel kann beispielsweise aus Edelstahl hergestellt sein. In diesem Fall bildet sich ein Stromweg von dem Kontaktabschnitt über die Kugel zur Hülle. Sie ist hierauf jedoch nicht beschränkt. Der Stromweg muss nicht über die Kugel erfolgen, sondern kann auch direkt von dem Kontaktabschnitt zur Hülle führen. Es ist daher nicht zwingend erforderlich, dass die Kugel leitfähig ist.

Ebenfalls in Figur 2 zu erkennen ist, dass in der Hülle 7 eine Feder 11, vorzugsweise eine Spiralfeder, vorgesehen ist, die die Kugel 9 gegen die geneigte Fläche 13 des Kontaktabschnitts 5 mit ihrer Federkraft beaufschlagt.

Durch das Zusammenwirken der Spiralfeder 11, der Kugel 9 und der geneigten Fläche 13 des Kontaktabschnitts 5 wird der Kontaktabschnitt zum einen in Richtung der Hüllenlängsrichtung mit der Federkraft beaufschlagt, sodass der Anschlag des Kontaktabschnitts 5 am Anschlag der Hülle 7 anliegt, wenn der Stift nicht auf einer Leiterbahn 1 aufliegt. Außerdem führt die geneigte Fläche 13 dazu, dass der Kontaktabschnitt 5 auch eine radiale Kraft, senkrecht zur Hüllenlängsrichtung erfährt und an die Innenwand der Hülle 7 gepresst wird. Auf diese Art wird ein Stromweg - wie oben beschrieben - hergestellt und auch bei einem Richtungswechsel der Drehung beibehalten.

Bei der gezeigten Ausführungsform sind das Umlenkelemente, bzw. die Kugel 9, und die Feder als getrennte Elemente ausgebildet. Dies ist nicht zwingend notwendig. Es ist auch möglich, die beiden Element einstückig auszubilden, etwa als Bandfeder mit einem geeignet geformten Anschlag an die geneigte Fläche 13.Entscheiden ist, dass zusätzlich zu einer Kraftkomponenten in Hüllenlängsrichtung auch eine Kraftkomponente senkrecht hierzu auftritt, die den Kontaktabschnitt gegen die Innenwand der Hülle verspannt.

Der Kontaktabschnitt 5 weist einen weiteren Abschnitt auf, der aus der Hülle herausragt und ausgebildet ist, um eine der Leiterbahnen 1 des Drehübertragers zu kontaktieren. Im zusammengebauten Zustand wird der Abstand zwischen den Leiterplatten 15 und 17 des Drehübertragers derart gewählt, dass der Kontaktabschnitt 5 um einen Teil des Federweges in die Hülle 7 hineingeschoben ist. Bei der bevorzugten Ausführungsform ist der Federweg zwischen 0,5 mm und 2,5 mm, weiter bevorzugt zwischen 0,75 mm und 2 mm, und insbesondere bevorzugt zwischen 1 mm und 1,5 mm. Der Arbeitspunkt des Drehübertragers wird so eingestellt, dass der Kontaktabschnitt sich in der Hüllenlängsrichtung um 0,5 mm nach vorne und hinten bewegen kann.

Die Feder hat an ihrem bevorzugten Arbeitspunkt eine Federkraft von 0,005 N bis 0,5 N, vorzugsweise von 0,01 N bis 0,2 N und besonders bevorzugt von 0,08 N bis 0,12 N. Bei einer besonders bevorzugten Ausführungsform beträgt die Federkraft 0,1 N.

Die Erfindung ist hierauf jedoch nicht beschränkt. Je nach Anwendung können auch deutlich größere Federkräfte, bis in den Bereich von 10 N, verwendet werden.

Bei der bevorzugten Ausführungsform ist die Feder 11 als Spiralfeder, beispielsweise aus Edelstahl, ausgebildet.

Die Erfindung ist hierauf jedoch nicht beschränkt. Auch andere Arten von Federn, wie etwa Bandfedern, Blattfedern, Bügelfedern oder Tellerfedern, oder andere elastische Elemente, wie Gummielemente/Kunststoffelemente, können verwendet werden. Dies liegt daran, dass die Feder nicht wesentlich zu dem elektrischen Stromweg beiträgt, da der Strom fast ausschließlich vom Kontaktabschnitt 5 und ggf. dem Umlenkelement 13 über die Hülle 7 fließt.

Die Oberfläche des Kontaktabschnitts 5 ist zumindest im Bereich der beabsichtigten Kontaktierung mit der Leiterbahn 1 mit Hartgold beschichtet und weist einen Härtegrad (Vickers-Härte) von beispielsweise 400 HV auf. Die Oberflächenhärte sollte zwischen 200 HV und 1000 HV, vorzugsweise zwischen 300 HV und 700 HV und insbesondere bevorzugt zwischen 350 HV und 500 HV liegen. Bei der bevorzugten Ausführungsform ist die Oberflächenhärte des Kontaktabschnitts 5 größer als jene der Leiterbahn 1.

Der Kontaktabschnitt 5 kann beispielsweise aus einer Kupfer-Beryllium-Legierung oder einer Kupfer-Messing-Legierung gebildet sein, ohne hierauf beschränkt zu sein.

Die Hülle 7 ist aus einem gut leitfähigen Material, beispielsweise kann hier ein vergoldetes Messing eingesetzt werden.

Beim Betrieb des Drehübertragers der Erfindung drehen sich die beiden Leiterplatten 15 und 17 relativ zueinander um die gemeinsame Mittelachse. Die Stifte 3 kontaktieren die jeweiligen Leiterbahnen 1, wobei die Federn 11 leicht komprimiert sind. Über die Stifte 3 und die Leiterbahnen 1 werden analoge und/oder digitale Signale und/oder Strom für eine Energieversorgung übertragen.

Die in Figur 1 gezeigten Leiterplatten 15 und 17 des Drehübertragers eignen sich beispielsweise für den Einsatz in einem Industrieroboter, der mit einer Vielzahl von Sensoren und/oder Akuatoren ausgestattet ist.

Die Stromversorgung für die Sensoren bzw. Aktuatoren erfolgt über die breiteren Leiterbahnen 1 auf der Leiterplatte 15. Die schmaleren Leiterbahnen 1 auf der Leiterplatte 15 dienen zur Übertragung von Steuersignalen bzw. von Meßsignalen von den Aktuatoren/Sensoren. Die Übertragung kann bidirektionale in Form von analogen und/oder digitalen Signalen erfolgen.

Insbesondere bei Industrierobotern kommt es zu häufigen und schnellen Wechseln der Drehrichtung des Drehübertragers. Durch den speziellen Aufbau der Stifte 3 des erfindungsgemäßen Drehübertragers ist auch in diesem Fall eine sichere Kontaktierung möglich, da die Feder 11, zusammen mit der Kugel 9 und der geneigten Fläche 13 immer einen sicheren elektrischen Kontakt zwischen dem Kontaktabschnitt 5 und der Innenwand der Hülle 7 bereitstellt.

Bei der bevorzugten Ausführungsform weist die Hülle 7 darüber hinaus einen Kontaktflansch auf, der die Kontaktierung des Stiftes 3 auf der Leiterplatte 17 erleichtert. Der elektrische Kontakt zwischen dem Stift 3 und der Leiterplatte 17 wird durch eine Verlötung hergestellt. Allerdings kann dies auch durch einen Presssitz erreicht werden.

Die Erfindung wurde anhand eines Drehübertragers beschrieben, bei dem zwei Leiterplatten 15 und 17, die einander gegenüberliegend, relativ zueinander um eine gemeinsame Mittelachse rotiert werden. Die Erfindung ist hierauf nicht beschränkt. Ein erfindungsgemäßer Drehübertrager kann auch ausgebildet werden, in dem die Leiterbahnen 1 als Ringe auf einer Welle ausgebildet sind, und wobei die Stifte 3 diese Ringe von außen kontaktieren.

Der erfindungsgemäße Drehübertrager ist für mehr als 50 000 Lastwechsel ausgelegt. Im normalen Betrieb, ist der Widerstand des Stromweges über einen der Stifte 3 im Bereich von 30 mOhm.

Obwohl die Erfindung anhand eines bevorzugten Ausführungsbeispiels beschrieben wurde, ist sie hierauf nicht beschränkt.

Beispielsweise kann in der Hülle 7 noch eine zweite Kugel vorgesehen sein, die an der anderen Ende der Feder 11 als die Kugel 9 vorgesehen sein kann.

Bei der bevorzugten Ausführungsform wird die Kugel 9 zwischen der Feder 11 und dem Kontaktabschnitt 5 verwendet. Es ist auch denkbar anstelle einer Kugel einen anderen Körper zu verwenden, der die Aufgabe erfüllt, zusammen mit der geneigten Fläche 13 die Federkraft auch in die Richtung senkrecht zur Hüllenlängsrichtung umzulenken. Beispielsweise kann anstelle der Kugel 9 ein Keilstück verwendet werden, dessen Neigung der Neigung der geneigten Fläche 13 entspricht.

Anders gesagt, die Erfindung betrifft einen Drehübertrager mit einer Leiterbahn 1 und einem Kontaktabschnitt 5, der die Leiterbahn 1 an einem Kontaktpunkt kontaktiert, entlang der Leiterbahn 1 im Betreib des Drehübertragres schleift und der in Richtung der Normalen auf die Leiterbahn 1 am Kontaktpunkt elastisch gehalten ist, wobei der Drehübertrager des Weiteren ein Mittel 13, 9 aufweist, um eine Kraft auf den Kontaktabschnitt 5 senkrecht zu Richtung der Normalen auszuüben, so dass der Kontaktabschnitt 5 und/oder das Mittel 13, 9 gegen eine Anschlagsfläche einer Haltevorrichtung 7 für den Kontaktabschnitt 5 gepresst wird, so dass ein Stromweg von der Leiterbahn 1 über den Kontaktabschnitt 5 und ggf. das Mittel 13, 9 auf die Haltevorrichtung 7 bereitgestellt wird.

Bevorzugt ist die Haltevorrichtung die Hülle 7 des Stifts 3.

Die Anschlagsfläche wird bevorzugt durch die Innenwand der Hülle 7 gebildet.

Bevorzugt ist das Mittel eine Kugel 9 und eine geneigten Fläche 13 an einer Seite des Kontaktabschnitts 5. Es ist aber auch denkbar eine zweite Feder, etwa eine Bügelfeder, in der Hülle 7 oder an dem Kontaktabschnitt 5 auszubilden, deren Federweg radial zur Hüllenlängsrichtung ausgerichtet ist, um den Kontaktabschnitt 5 mit einer Kraft senkrecht zur Längsrichtung der Hülle 7 zu beaufschlagen.

Auch ist es möglich, den Kontaktabschnitt 5 oder die Hülle 7 selbst elastisch auszubilden, etwa durch einen Längsschlitz in der Hülle 7, so das ein federnder Kontakt zwischen der Hülle 7 und dem Kontaktabschnitt 5 in der Hülle 7 gebildet wird.

## Patentansprüche

1. Drehübertrager mit
einer Leiterbahn (1);
einem Stift (3), der mit der Leiterbahn (3) kontaktiert, so dass er entlang der Leiterbahn (3) im Betrieb des Drehübertragers schleift;
wobei der Stift (3) umfasst:
einen Kontaktabschnitt (5) und ein Umlenkelement (9), die in einer Hülle (7) in deren Längsrichtung beweglich und durch ein elastisches Element (11) gegen die Hülle (7) vorgespannt sind;
wobei der Kontaktabschnitt (5) an seiner der Leiterbahn (1) zugwandten Seite aus der Hülle (7) hervorragt, um die Leiterbahn (1) zu kontaktieren;
wobei der Kontaktabschnitt an seiner der Leiterbahn (1) abgewandten Seite eine zur Längsrichtung der Hülle (7) geneigte Fläche (13) aufweist,
wobei das Umlenkelement (9) durch das elastische Element (11) gegen die geneigte Fläche (13) gedrückt wird.

2. Drehübertrager nach Anspruch 1, bei dem das elastische Element eine Feder (11) ist, die eine Federkraft von 0,005 N bis 0,5 N, vorzugsweise von 0,01 N bis 0,2 N und besonders bevorzugt von 0,08 N bis 0,12 N aufweist.

3. Drehübertrager nach Anspruch 1 oder 2, bei dem der maximale Federweg 0,5 mm bis 2,5 mm, bevorzugt 0,75 mm bis 2 mm und besonders bevorzugt 1 mm bis 1,5 mm beträgt.

4. Drehübertrager nach einem der vorangehenden Ansprüche, bei dem der Kontaktabschnitt (5) eine Oberflächenhärte von 200 HV bis 1000 HV, vorzugsweise von 300 HV bis 750 HV und besonders bevorzugt von 350 HV bis 500 HV hat.

5. Drehübertrager nach einem der vorangehenden Ansprüche, bei dem eine Mehrzahl von Stiften (3) eine Leiterbahn (1) kontaktieren.

6. Drehübertrager nach einem der vorangehenden Ansprüche, bei dem eine Mehrzahl von parallelen Leiterbahnen (1) ausgebildet sind, die zusammen mit einer Mehrzahl von Stiften (3) mehrere unabhängige Übertragungswege bereitstellen.

7. Drehübertrager nach einem der vorangehenden Ansprüche, bei dem die Leiterbahn (1) oder die Leiterbahnen kreisförmig auf einer ersten Leiterplatte (15) ausgebildet ist bzw. sind.

8. Drehübertrager nach Anspruch 7, bei dem der Stift oder die Stifte auf einer zweiten Leiterplatte (17) ausgebildet ist bzw. sind, die der ersten Leiterplatte gegenüberliegt, wobei die beiden Leiterplatten (15, 17) zum Betrieb des Drehübertragers relativ zueinander drehbar gehalten sind.

9. Industrieroboter mit
einem drehbaren Arbeitsteil,
einem Drehübertrager nach einem der Ansprüche 1 bis 8, wobei
der Drehübertrager Daten und/oder Leistung zu bzw. von dem drehbaren Arbeitsteil (19) überträgt.

10. Industrieroboter nach Anspruch 9, bei dem
das drehbare Arbeitsteil eine Vielzahl von Sensoren und/oder Aktuatoren trägt, die elektrisch mit dem Drehübertrager verbunden sind.
